# DEMANDE DE BREVET EUROPEEN

(11) **EP 2 674 286 A1**
(43) Date de publication de la demande: **18.12.2013**
(21) Numéro de dépôt: 13183297.4
(22) Date de dépôt: 16.01.2009
(51) Int. Cl.: B29C 70/54, B26F 1/24, B29C 70/86, B29K 101/12, B29K 105/08

(54) **Procédé et dispositif pour la pose d'un insert dans un matériau composite thermoplastique**

(30) Priorité: 28.01.2008 FR 0850510
(62) Demande divisionnaire de: 09705028.0
(71) Demandeur: Hacoma, 46210 Montet et Bouxal (FR)
(72) Inventeur: Hache, Grégory, 46120 Molieres (FR); Saint Martin, Christophe, 46120 Saint-Bressou (FR)
(74) Mandataire: Maupilier, Didier

(57) **Abrégé**

Pour poser un insert (2) dans une pièce (1) en matériau composite thermoplastique, la pièce est chauffée localement à une température Tf de formage plastique et les fibres (10) du matériau composite sont écartées progressivement en même temps que la matrice (11) à l'état plastique est repoussée radialement jusqu'à former un trou aux dimensions voulues dans lequel est introduit l'insert avec l'outil mis en oeuvre pour réaliser le trou lorsque la pièce est encore à la température de formage plastique. Lorsque l'insert est posé, une opération de calibrage de l'épaisseur de la pièce comportant l'insert est réalisée sans enlèvement de matière malgré la matière excédentaire repoussée du trou.

Un outil comportant une aiguille (31) et un talon (312) est mis en oeuvre pour réaliser le trou et poser l'insert suivant le procédé, un zone intermédiaire entre l'aiguille et le talon recevant l'insert à poser.

## Description

La présente invention appartient au domaine de la fabrication des pièces en matériaux composite.

Plus particulièrement l'invention concerne un procédé et un dispositif pour la pose d'inserts dans des trous réalisés dans des matériaux composites comportant des fibres maintenues dans une résine ayant des propriétés thermoplastiques.

Le plus souvent pour des besoins d'assemblage mais non exclusivement, les pièces des structures comportent des trous servant à des passages de fixations. Ces trous doivent être réalisés avec des tolérances relativement serrées pour garantir la qualité des assemblages, en particulier lorsque les assemblages sont soumis à des efforts significatifs.

Dans les structures modernes il est fréquent que des pièces soient réalisées en matériau composite comportant des fibres minérales ou organiques, verre, carbone, Kevlar ® ... maintenues dans une résine organique.

La réalisation de trous dans de telles pièces composites est pratiquée soit lors de la fabrication de la pièce considérée et parfois associée à la pose d'inserts maintenus dans un moule utilisé pendant la réalisation de la pièce ou le plus souvent par perçage de la pièce réalisée, c'est à dire lorsque la résine organique maintenant les fibres est durcie.

La technique consistant à disposer un insert dans un moule lors de la réalisation de la pièce s'avère relativement complexe à mettre en oeuvre lorsque la pièce est elle-même de forme complexe et en outre il est difficile de garantir la position précise du trou, par exemple une précision inférieure au dixième de millimètre, en raison des risques de déformation de la pièce lorsque celle-ci est sortie du moule.

La technique du perçage permet de réaliser les trous dans la pièce à des emplacements précis en utilisant les techniques voisines des techniques conventionnelles utilisées pour la réalisation de trous dans des pièces en matériaux métalliques, sous réserve de mettre en oeuvre des outils de perçage adaptés aux matériaux. Il est dans ce cas connu de percer la pièce au diamètre extérieur d'un insert et de rapporter l'insert par collage pour obtenir la précision recherchée grâce aux caractéristiques de l'insert.

Outre le temps de réalisation qui se trouve augmenté par l'enchaînement des opérations de perçage et de collage, et de la nécessité de préparer les surfaces à coller, la cohésion de l'insert avec le matériau composite ne se trouve garantie que par la qualité du collage dont la stabilité dans le temps, et en présences de déformation de la pièce lors de son utilisation, est difficile à garantir.

La pose d'un insert dans une pièce en matériau composite s'avère donc une opération délicate pour laquelle des gains de temps et de coûts de réalisation sont particulièrement important du fait qu'un nombre élevé d'inserts peut être posé dans les pièces en matériaux composite telle que les pièces utilisées dans l'industrie aéronautique ou automobile.

La présente invention a précisément pour but une méthode et un dispositif pour la pose d'inserts lors de la réalisation de perçages de précision dans des pièces en matériau composite sans endommagement des fibres au niveau du trou de perçage.

Le procédé permet de poser un insert dans une pièce, formée essentiellement de fibres, en particulier de fibres longues maintenues dans une matrice, entre une première face, dite face supérieure, par laquelle le trou est réalisé et une seconde face, dite face inférieure, par laquelle le trou débouche, lorsque la matrice consiste essentiellement en un matériau thermoplastique, présentant un état plastique lorsqu'il est porté à une température **Tf,** dite température de formage, et présentant un état non plastique lorsque qu'il est à une température **Tu,** dite température d'utilisation, inférieure à **Tf.**

Pour éviter la rupture des fibres et la dégradation des performances de la pièce, le procédé comporte les étapes de réaliser un trou :
- a) chauffer localement au moins à l'endroit du trou à réaliser la matrice de la pièce à la température **Tf ;**
- b) écarter les fibres maintenues par la matrice à l'emplacement voulu pour le trou en repoussant radialement par rapport à un axe longitudinal du trou la matière à l'état plastique de ladite matrice jusqu'à atteindre une section voulue pour le trou ;
le trou étant réalisé c) avec une section sensiblement égale à la section extérieure de l'insert à poser, puisd) l'insert est inséré dans le trou réalisé, la matière de la matrice étant à l'état plastique ;
- e) la matière de la matrice est refroidie à la température **Tu,** ou au moins à une température inférieure à **Tf** pour laquelle ladite matrice n'a plus de propriété thermoplastique, en maintenant la matière de la matrice repoussée et les fibres écartées autour du trou dans lequel est inséré l'insert.

Il est ainsi posé un insert qui vient occuper le trou réalisé alors que la matière de la matrice est encore à l'état plastique et qui permet de solidariser efficacement en une seule étape, avec l'opération de perçage, l'insert et la pièce.

Pour éviter de déformer la pièce dans la direction de l'axe du trou pendant l'opération de perçage, la pièce 1 est avantageusement maintenue dans la zone du trou à réaliser par une plaque de contre-poussée pendant la réalisation du trou.

Pour maîtriser la sur-épaisseur de la pièce provoquée autour du trou, dans lequel est inséré l'insert, par la matière repoussée de l'emplacement du trou, après l'insertion de l'insert à l'étape d) et avant le refroidissement de la matière de la matrice à l'étape e), de préférence une étape de calibration de l'épaisseur de la pièce dans une zone périphérique du trou et de l'insert est réalisée au cours de laquelle une pression est exercée entre la face supérieure et la face inférieure pour répartir la matière de la pièce repoussée de l'emplacement du trou vers la zone périphérique.

Dans un mode de mise en oeuvre, l'insert posé est un insert rigide dont les forme et dimensions ne sont pas modifiées lorsque l'insert est posé.

Dans un mode de mise en oeuvre, l'insert est réalisé dans un matériau comportant une matrice thermoformable ou thermodurcissable et l'insert est formé à la température Tf de thermoformage de la pièce.

Dans ce cas, le trou de l'insert réalisé dans un matériau thermoformable, est conformé par une empreinte d'une forme appliquée au cours de l'étape de calibration.

Dans une forme de réalisation, l'insert est maintenu par un outil de perçage dont la section du talon d'une aiguille correspond sensiblement à la section de l'insert, de sorte que l'insert est inséré dans le trou réalisé par l'aiguille lorsque celle-ci traverse la pièce.

Lorsque l'opération de perçage est réalisée dans une phase de fabrication de la pièce au cours de laquelle la pièce est portée à une température égale ou supérieure à **Tf**, l'opération de perçage est avantageusement réalisée sans étape de chauffage supplémentaire.

Lorsqu'il est nécessaire d'élever la température de la pièce, le chauffage de la pièce à l'emplacement du trou est réalisé localement lors de l'opération de perçage par des moyens de chauffage par rayonnement ou par conduction de contact ou par ultrasons.

Pour la mise en oeuvre du procédé, l'invention concerne également un outil de pose d'un insert dans la pièce en matériau composite thermoplastique qui comporte un outil de perçage avec une aiguille et un corps :
- comportant du côté d'une extrémité libre de l'aiguille, une extrémité effilée ;
- comportant, du côté de l'autre extrémité de l'aiguille, un talon d'une section sensiblement constante et égale à la section du trou à réaliser pour placer l'insert ;
- entre l'extrémité effilée et le talon une zone de section évolutive dans laquelle la section de l'aiguille évolue progressivement depuis la section de l'extrémité effilée vers la section du talon de à écarter les fibres maintenue par la matrice et à repousser radialement par rapport à l'axe longitudinal du trou la matière de la matrice à l'état plastique lorsque l'aiguille est enfoncée dans la pièce, la section du trou pour poser l'insert étant déterminée par la section du talon ;

- le corps étant agencé du côté du talon de l'aiguille ;
- l'aiguille et le corps étant assemblés avec une zone intermédiaire de section réduite par rapport à la section du talon.

Il est ainsi obtenu un outil qui permet de maintenir l'insert dans l'axe du trou lors de l'opération de perçage réalisé par l'outil et d'introduire l'insert dans le trou réalisé.

Pour obtenir un trou cylindrique dans la pièce, la longueur de talon **Lt** est égale ou supérieure à l'épaisseur de la pièce à l'emplacement du trou à réaliser.

Dans une forme de réalisation, l'aiguille et le corps sont assemblés par une extension cylindrique du corps ou de l'aiguille, comportant la zone intermédiaire, coopérant avec un trou correspondant de l'aiguille ou du corps, et dans lequel l'aiguille et le corps sont séparables de sorte qu'un insert peut être placé sur la zone intermédiaire, entre le talon de l'aiguille et le corps.

Dans une forme de réalisation, le corps forme un épaulement par rapport au talon, ledit épaulement formant une surface d'appui sur une zone périphérique du trou lorsque l'aiguille et l'insert sont enfoncés dans la pièce.

Pour faciliter la pénétration de l'aiguille et l'écartement des fibres dans un mode de réalisation l'aiguille est vibrante, soumise à des vibrations de faible amplitude.

Pour réaliser des formes particulières tel qu'une fraisure ou un filetage au niveau du trou de l'insert, le corps ou l'aiguille comporte une forme destinée à laisser une empreinte correspondant à la géométrie de ladite forme dans l'insert sur un ou des bords du trou de l'insert ou dans le trou.

La zone intermédiaire de l'extension cylindrique a une section inférieure à la section du talon. La zone intermédiaire reçoit l'insert devant être fixé dans le trou réalisé dans la pièce, la section de la zone intermédiaire correspondant aux formes et dimensions d'un trou dans l'insert, la forme et les dimensions de la section du talon correspondant à des formes et dimensions d'une section extérieure de l'insert avant sa pose.

Dans une forme de réalisation avantageuse pour imposer des formes et des épaisseurs à l'insert et à la pièce dans la zone de l'insert et pour favoriser l'adhérence entre l'insert et la pièce, le corps et l'aiguille comportent en position assemblée au moins une première position écartée dans laquelle l'insert n'est pas déformé et une seconde position rapprochée dans laquelle l'insert est déformé lorsque l'insert peut être formé plastiquement à la température **Tf**.

Avantageusement l'aiguille est associée à des moyens de chauffage par rayonnement ou par conduction ou par ultrasons pour assurer le chauffage à la température de formage de la zone de la pièce dans laquelle le dispositif de perçage doit réaliser un trou.

Pour éviter que la pièce ne se trouve déformée par les efforts exercés par l'aiguille lors de sa pénétration dans la zone de la pièce à l'état plastique, de préférence le dispositif comporte une plaque de contre-poussée. La plaque de contre poussée est destinée à être placée sur la face inférieure de la pièce dans la zone du trou à réaliser. La plaque de contre-poussée comporte elle-même un trou de section au moins égal à la section du talon, l'axe dudit trou et l'axe de l'aiguille étant confondus ce qui permet à l'aiguille de réaliser le perçage dans la pièce sans être gêné par la plaque de contre-poussée.

La description détaillée d'un exemple de mise en oeuvre et de réalisation de l'invention faite en référence aux figures qui représentent :
Figures 1a et 1b : un exemple d'outil de perçage pour la réalisation d'un trou traversant dans un matériau composite thermoplastique, seul en vue de profil figure 1a et en perspective lors d'une opération de perçage d'une pièce figure 1b ;
Figure 2 : un exemple d'un outil de pose d'un insert suivant l'invention comportant deux éléments désassemblés ;
Figure 3a à figure 3f : une présentation schématique d'une opération de perçage avec pose d'un insert à l'aide d'un outil à l'exemple de la figure 2 ;
Figure 4 : une vue en perspective d'une coupe d'une pièce obtenue après un perçage avec pose d'un insert suivant le procédé de l'invention ;
Figure 5 : une section illustrant l'application du procédé au cas d'une pièce réalisée avec une structure sandwich, une demi-section étant présentée avec l'outil en fin d'opération de perçage et de pose de l'insert et l'autre demi-section étant présenté une fois l'outil dégagé.

L'invention a pour objet un procédé et un outil pour réaliser la pose d'inserts dans une pièce 1 en matériau composite comportant des fibres 10, en particulier mais non exclusivement des fibres longues, maintenues dans une matrice organique 11 dure présentant des propriétés thermoplastiques.

Par propriétés thermoplastiques d'une matrice organique on entend dans la présente description que le matériau formant la matrice du matériau composite est en mesure d'être amené dans un état relativement fluide, dit état plastique, par une élévation de la température à une valeur **Tf** dite température de formage, état dans lequel ladite matrice est déformable sans perdre des caractéristiques physico-chimiques et mécaniques attendues dans la pièce 1 lorsque ladite pièce est ramenée à une température inférieure à **Tf,** en particulier à une température **Tu** prévue d'utilisation de la pièce.

Des familles particulières de matériaux composites présentant de telles caractéristiques sont regroupées sous la désignation générale de « composites thermoplastiques » et comportent des matrices qui sont déformables lorsque la température est portée à une valeur suffisante, qui dépend du type de matériau organique, et retrouvent leurs propriétés mécaniques par durcissement lorsque la température est à nouveau abaissée à une température correspondant à une température de mise en oeuvre de la pièce. Ces composites thermoplastiques se présentent le plus souvent dans un état semi-ouvré sous la forme de plaques qui sont utilisées pour la réalisation de pièces par des techniques de formage à chaud, notamment de formage dans des moules.

Une pièce 1 en matériau composite comportant des fibres 10 maintenues dans une matrice 11 présentant des caractéristiques thermoplastiques comporte deux faces entre lesquelles doit être posé un insert :
- une première face, dite face supérieure 12, par laquelle un trou doit être réalisé pour placer l'insert ;
- une seconde face, dite face inférieure 13, par laquelle le trou doit déboucher.

Pour réaliser le trou dans la pièce 1 en matériau composite thermoplastique :
- dans une première étape la pièce 1 est chauffée, localement au moins, à l'endroit du trou à réaliser pour amener la matrice 11 à la température **Tf** pour laquelle ladite matrice comporte des caractéristiques plastiques voulues ;
- dans une seconde étape les fibres 10 maintenues par la matrice 11 sont écartées à l'emplacement voulu pour le trou en repoussant radialement, par rapport à un axe longitudinal du trou, la matière devenue plastique de ladite matrice et en déformant lesdites fibresjusqu'à atteindre la section voulue pour le trou.
- Ensuite la température de la pièce autour du trou est ramenée à une température **Tu** pour laquelle la matrice 11 ne présente pas de caractéristique plastique en même temps que la matière de la matrice et les fibres sont maintenues écartées pour ne pas refermer, même partiellement, le trou.

Par cette manière de procéder, les fibres 10 sont déformées autour du trou de sorte que les dites fibres ne soient pas coupées ou brisées, ou au moins pour que la quantité de fibres brisées soit la plus faible possible. Un tel résultat est obtenu lorsque la déformation est réalisée en repoussant radialement les fibres de manière progressive et en association à l'élévation locale de température qui a pour effet de rendre malléable la matrice 11.

La matière de la matrice peut être chauffée à proximité immédiate de la zone de la matrice devant être déformée au fur et à mesure de la déformation réalisée pour former le trou afin de limiter des déformations axiales des zones de la pièce 1 voisines du trou au cours de l'opération de perçage.

La pièce 1 peut également être chauffée sur une zone au moins égale à la zone devant être chauffée pour réaliser le trou avant de commencer les étapes de repoussage de la matrice et d'écartement des fibres. Dans ce cas, avantageusement la pièce est localement positionnée contre un support 33 placé sur la face inférieure 13 qui maintient la pièce 1 et évite à ladite pièce, localement dans un état plastique, d'être déformée suivant le sens axial pendant la réalisation du trou.

Suivant le procédé, un insert 2, c'est à dire un élément rapporté ayant la forme générale d'un tore, est placé dans le trou réalisé, avant le refroidissement de la matrice, le matériau de la pièce et le matériau de l'insert étant solidarisés lorsque la matrice 11 est à la température **Tf** à laquelle ladite matrice est plastique par application d'une pression sur le matériau de la pièce et ou de l'insert, avant que la température ne soit abaissée.

Le trou est réalisé suivant le procédé dans le matériau thermoplastique de la pièce avec un diamètre sensiblement égal au diamètre de l'insert.

L'insert 2 permet de renforcer si besoin la pièce 1 dans la zone du trou et par un choix du matériau de l'insert de réaliser une isolation galvanique d'une fixation traversant le trou du matériau de la pièce. Par exemple un insert réalisé dans un matériau composite à base fibres de verre ou d'aramide permet d'isoler une fixation réalisée dans un alliage métallique sensible à une corrosion induite par le carbone d'une pièce réalisée dans un matériau composite à base de fibres de carbone.

Dans un mode préféré de mise en oeuvre du procédé, une zone périphérique 14 de la pièce 1 autour du trou en cours de réalisation pour poser l'insert est soumise, lorsque le trou est au diamètre souhaité et l'insert 2 placé, , à une pression entre la face supérieure 12 et la face inférieure 13 de sorte que la matière initialement à l'emplacement du trou, et repoussée dans la zone périphérique 14 autour de laquelle elle forme une sur-épaisseur, soit répartie et que soit obtenue une épaisseur définie de la pièce 1 dans la zone périphérique 14.

Cette étape, dite étape de calibration de l'épaisseur, est réalisée avant le refroidissement de la pièce, c'est à dire lorsque le matériau de la matrice 11 dans la zone périphérique 14 a encore des propriétés plastiques en raison de sa température, et permet d'obtenir une épaisseur parfaitement définie en gérant la répartition de la matière localement en excès du fait de la réalisation du trou qui est effectué sans enlèvement de matière.

Dans un mode particulier de mise en oeuvre de cette étape de calibration de l'épaisseur, la pression est exercée sur la pièce 1 dans la zone périphérique 14 afin de conformer la dite zone périphérique en fonction de l'utilisation qui doit être fait du trou et de l'insert.

Par exemple lorsque l'insert doit recevoir une fixation à tête fraisée pour les besoins d'un assemblage et que l'insert est lui-même réalisé dans un matériau thermoformable à la température Tf de formage du matériau composite, la zone périphérique est conformée pour reproduire au niveau du trou de l'insert la fraisure adaptée à la fixation.

Le trou réalisé par le procédé est le plus souvent un trou circulaire défini par un diamètre, toutefois le procédé s'applique avantageusement à des trous de forme quelconque.

Dans un mode préféré de réalisation, afin de mettre en oeuvre le procédé de l'invention, un outil de pose d'inserts comporte un outil de perçage 3 comportant une aiguille 31 destinée à traverser la pièce 1 pour réaliser un trou.

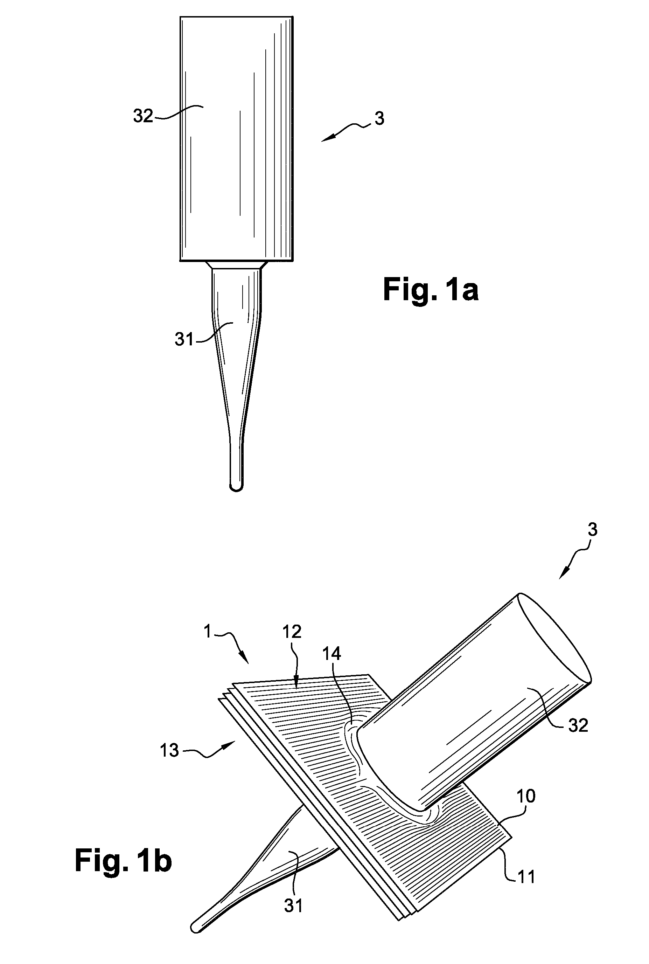

On considèrera pour la description de l'outil de perçage 3 et de ses éléments constitutifs que ledit outil de perçage est enfoncé dans la pièce 1, portée localement à la température **Tf,** à l'emplacement du trou à réaliser pour obtenir le trou de la section voulue, comme il est illustré sur les figures 1a et 1b au moyen d'un outil ne réalisant pas la pose d'un insert.

Dans un mode de réalisation l'aiguille comporte une extrémité effilée 311, c'est à dire une extrémité d'une section relativement petite par rapport à la section du trou à réaliser dans la pièce, et comporte à l'opposée de l'extrémité effilée 311 suivant un axe 314 de l'aiguille un talon 312, c'est à dire une zone cylindrique, de longueur **Lt,** dont la section correspond à la section voulue pour le trou à réaliser, comme il sera vu ultérieurement dans la description, correspondant sensiblement à la section de l'insert à poser.

Entre l'extrémité effilée 311 et le talon 312, l'aiguille comporte une zone de sections non constantes suivant l'axe 314, dite zone évolutive 313, de longueur Lv, dans laquelle la section de l'aiguille évolue de manière sensiblement continue entre la section de l'extrémité effilée 311 et la section du talon 312.

L'extrémité effilée 311 de l'aiguille comporte une extrémité libre 315 du côté de l'aiguille opposée au talon 312 qui peut être une forme en pointe, c'est à dire que la dite extrémité correspond sensiblement à un cône terminal, ou bien une forme émoussée, c'est à dire que la dite extrémité correspond sensiblement à une forme terminale sphérique ou arrondie.

Le choix d'une forme particulière d'extrémité libre 315 est dicté par des considérations liées aux matériaux mis en oeuvre et ou au mode d'apport d'énergie de chauffage de la pièce et ou au nombre de perçage devant être réalisé avec une aiguille donnée.

La longueur **Lt** du talon correspond au moins à l'épaisseur de la pièce à l'emplacement du trou, en pratique au moins à la longueur du trou correspondant à une section constante.

Dans la plupart des cas, les trous réalisés sont de sections circulaires et dans ces cas la section droite du talon est circulaire.

Cependant le procédé et l'outil de perçage s'appliquent à la réalisation de trous de sections non circulaires, par exemple des trous de sections de formes allongées ou des trous de sections polygonales. Pour obtenir des trous de sections non circulaires, la section du talon 312 est réalisée avec la forme adaptée c'est à dire avec une section correspondant à la section du trou à réaliser correspondant lui-même sensiblement à la section de l'insert à poser.

Les lois de variation des sections de l'aiguille 31 dans la zone évolutive 313 entre la section de l'extrémité effilée 311 et celle du talon 312 déterminent en pratique la manière dont la matière de la matrice 11 est repoussée lorsque l'aiguille est enfoncée et donc permettent dans une certaine mesure de contrôler le volume de matière repoussé dans les différentes directions autour d'un axe du trou.

L'outil de perçage 3 comporte également un corps 32 dont la forme n'est pas imposée par le procédé sauf au niveau d'un raccordement avec l'aiguille 31.

Le corps 32 est solidaire de l'aiguille 31 au niveau du talon 312 de l'aiguille et du côté de l'aiguille opposé à l'extrémité effilée 311.

Le corps 32 permet de tenir l'aiguille 31 pendant les opérations de perçage de la pièce 1 c'est à dire qu'il permet d'orienter, de guider et d'appliquer les efforts nécessaires à l'aiguille pour réaliser le trou par enfoncement de l'aiguille soit à l'aide d'un outil support manuel soit par une machine automatisée tel qu'un robot porteur d'outil ou telle qu'une machine multi-axes à commande numérique.

Lorsque l'aiguille 31, pour les besoins de la mise en oeuvre du procédé, est utilisée pour apporter de l'énergie à la pièce 1 afin de chauffer localement la matière de la matrice 11, le corps 32 comporte avantageusement des moyens pour apporter à l'aiguille les quantités de chaleur nécessaires.

Une plaque de contre-poussée 6 vient avantageusement en appui sur la face inférieure 13 de la pièce 1.

Ladite plaque de contre-poussée peut prendre de nombreuses formes, en particulier en raison de la forme de la pièce 1 dans la zone où est réalisé une opération de perçage, mais comporte elle-même un trou 61 dont la section correspond sensiblement à la section du trou à réaliser et donc de l'aiguille 31 dans la zone du talon 312 de sorte à laisser passer l'aiguille 31 pendant les opérations de perçage.

La plaque de contre-poussée 6 et l'aiguille 31 sont agencées de sorte que l'axe 314 de l'aiguille et un axe 62 du trou 61 de la plaque de contre-poussée sont sensiblement confondus et que l'aiguille 31 est mobile suivant l'axe 314, 62 par rapport à ladite plaque de contre-poussée.

Dans un mode particulier de réalisation de l'outil de perçage 3, ledit outil comporte des moyens de vibration qui permette de faire vibrer au moins l'aiguille 31 avec une faible amplitude ce qui a pour effet de faciliter la progression de l'aiguille lors de la réalisation du perçage tout en facilitant le ré-arrangement des fibres 10, en particulier dans le cas des fibres longues, autour du trou au sein de la matrice 11.

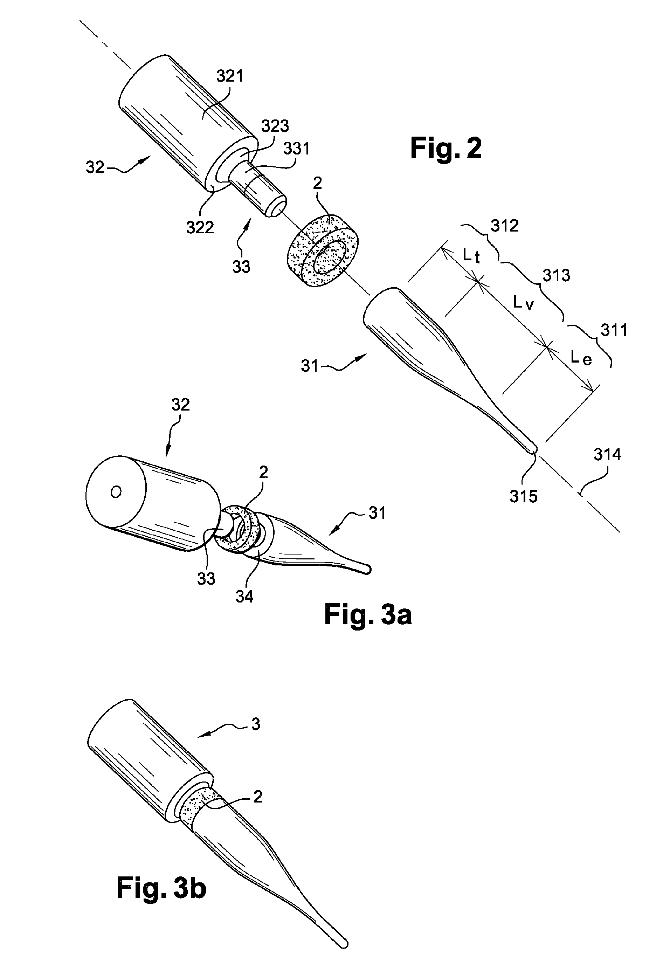

En outre, l'aiguille 31 et le corps 32 sont assemblés, comme illustré sur les figures 2, 3a et 3b, de sorte qu'une zone intermédiaire 331 entre le talon 312 et un épaulement 322 du corps 32 présente une section réduite par rapport à la section dudit talon sur une longueur au moins égale à l'épaisseur de la pièce 1 dans la zone du trou à réaliser.

Une largeur de l'épaulement 322 est choisie pour recouvrir la zone périphérique 14 dans laquelle la matière de la pièce 1 repoussée lors de la formation du trou par l'aiguille 31 doit être répartie lors d'une calibration de l'épaisseur de la pièce 1 dans ladite zone périphérique.

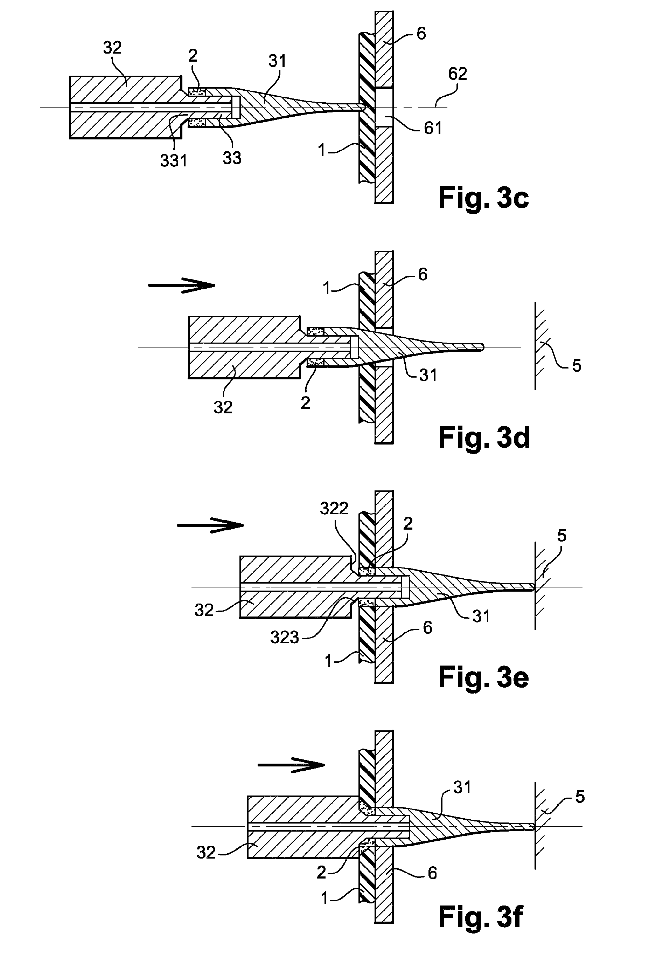

La section de la zone intermédiaire 331 est déterminée par une section recherchée du trou à l'intérieur de l'insert 2 et dans ce cas la section du talon 312 correspond sensiblement à la section extérieure de l'insert pour la pose duquel le trou est réalisé dans la pièce comme illustré sur les figures 3.

Un insert peut être réalisé avec différentes technologies, en particulier en fonction du type de pièces dans lequel il est incorporé et du type d'utilisation de la pièce.

L'insert est par exemple de manière connue un insert rigide, réalisé dans un matériau métallique ou dans un autre matériau, avec une forme et des dimensions établies qui ne sont pas modifiées lorsque l'insert est posé au moyen de l'outil de pose.

Dans une autre forme de mise en oeuvre, l'insert est réalisé dans un matériau comportant une matrice thermoplastique ou thermodurcissable, par exemple une forme tissée, avantageusement suivant trois directions, en forme de tore, comme illustré sur la figure 2, et imprégnée d'une résine thermoplastique ou thermodurcissable.

Dans ce cas les caractéristiques de la matrice thermoplastique de l'insert vis à vis de températures permettant de former l'insert sont choisies de sorte que l'insert puisse être formé aux températures effectivement mises en oeuvre pendant l'opération de perçage.

De même les caractéristiques de la matrice thermodurcissable de l'insert, le cas échéant, sont choisies pour que le matériau de ladite matrice soit compatible d'un formage aux températures effectivement mises en oeuvre pendant l'opération de perçage et d'une opération de cuisson simultanée ou ultérieure ayant pour effet de rendre définitivement dur l'insert.

Dans cette forme de mise en oeuvre pour la pose d'un insert 2 thermoplastique ou thermodurcissables, avantageusement l'aiguille 31 et le talon 32 comportent au moins deux positions assemblées, une première position dite position écartée dans laquelle un insert 2 placé sur la zone intermédiaire 331 est maintenu sans être déformé, et une seconde position dite position rapprochée dans laquelle l'insert placé sur la zone intermédiaire 331 est soumis à une pression entre l'épaulement 322 et le talon 312 qui a pour effet d'obtenir une épaisseur calibrée, correspondant à une longueur du trou dans la pièce, de l'insert et le cas échéant de conformer l'insert par exemple par la reproduction en creux d'une forme 323 du corps ou de l'aiguille, par exemple pour former un chanfrein au bord du trou.

La pression exercée sur la pièce 1 dans la zone périphérique 14 et sur l'insert 2 lorsque le talon et l'aiguille sont rapprochés a pour effet non seulement de calibrer l'épaisseur de la pièce et de l'insert dans la zone du trou mais également de solidariser les matériaux de ladite pièce et du dit insert en raison d'une pression locale générée au niveau de l'interface entre la pièce et l'insert au cours de l'opération de calibration.

Avantageusement une extension cylindrique 33 du corps 32 coopère avec un trou 34 de section équivalente de l'aiguille 31, ou inversement une extension cylindrique de l'aiguille coopère avec un trou de section équivalente du corps (solution non représentée), pour permettre de séparer l'aiguille du corps afin dans un premier temps de mettre en place un insert 2 sur la zone intermédiaire 331, comme illustré sur les figures 3a et 3b, et dans un deuxième temps après l'opération de perçage de retirer l'outil 3 qui enserre, comme illustré sur la figure 3f, l'insert 2 après la pose dudit insert.

L'extension cylindrique 33 permet également, lorsque nécessaire un déplacement relatif du corps et de l'aiguille entre les positions écartée et rapprochée au cours d'une séquence de perçage avec pose d'un insert thermoplastique ou thermodurcissable.

Le déplacement contrôlé de l'aiguille 31 par rapport au corps 32 est réalisé par tout moyen mécanique ou autre permettant de contrôler ce déplacement.

Avantageusement l'aiguille 31 est solidaire d'une tige qui pénètre dans le corps 32 et des moyens d'actionnement, non représentés, agissent sur la tige pour modifier la position relative de l'aiguille et du corps.

Dans une autre forme de réalisation, l'extension cylindrique 33 forme un piston d'un vérin dont une chambre formée par ladite extension et l'aiguille 31, ou le corps 32, est utilisée pour contrôler la position relative du corps et de l'aiguille.

Dans une autre forme de réalisation, l'extension cylindrique 33 est de section circulaire et comporte un filetage, solution non représentée, sur une partie de sa longueur qui permet de contrôler la position relative du corps 32 et de l'aiguille 31 par une rotation entre ces deux éléments.

Dans une autre forme de réalisation des moyens extérieurs à l'aiguille et au corps sont utilisés.

Par exemple comme illustré sur les figures 3c et 3d une butée arrière 5 limite la progression de l'aiguille 31 en fin d'opération de perçage de sorte qu'une force exercée sur le corps 32 provoque le déplacement relatif recherché entre ledit corps et la dite aiguille.

Dans une forme particulière de réalisation d'un outil de pose d'un insert formé au cours de l'opération de perçage, l'extension cylindrique 331 comporte un filetage, non représenté, dans la zone de l'insert 2 de sorte que ledit filetage soit imprimé dans l'insert 2 réalisé dans un matériau thermoplastique ou un matériau thermodurcissable lors de la pose dudit insert de sorte à former un trou taraudé.

Dans ce cas la partie de l'outil 3 comportant l'extension 331 est retirée après l'opération de perçage par dévissage.

Cet exemple illustre que des trous de formes différentes, autres que de sections circulaires et également autres que cylindriques, sont possibles par la mise en oeuvre du procédé.

Les figures 3a à 3f illustrent une séquence de réalisation d'un trou dans la pièce 1 avec pose d'un insert 2.

Dans un premier temps le corps 32 et l'aiguille 31 sont séparés et l'insert 2 est placé sur la zone intermédiaire 331 de l'extension 33 (figure 3a).

Le corps 32 et l'aiguille 31 sont alors assemblés pour former l'outil de perçage 3 porteur de l'insert 2 (figure 3b).

L'outil est alors mis en oeuvre suivant le procédé pour réaliser un trou dans la pièce 1, par exemple maintenue par une plaque de contre-poussée 6, correspondant à la section du talon 312 de l'aiguille en enfonçant l'aiguille 31 dans la pièce 1, localement à la température de formage **Tf** (figures 3c, 3d et 3e). La section du talon 312 correspond également sensiblement à la section de l'insert 2 de sorte que lorsque ledit talon de l'aiguille a traversé la pièce 1, l'insert se trouve occuper le trou réalisé par l'aiguille (figure 3e).

Le corps 32 est alors rapproché de l'aiguille 31, par exemple en arrêtant la progression de l'aiguille au moyen d'une butée 5, pour calibrer l'épaisseur de la zone périphérique du trou entre l'épaulement 322 du corps et la plaque de contre-poussée 6 et pour conformer le trou de l'insert en fonction de la forme 323 de l'épaulement 322 (figure 3f).

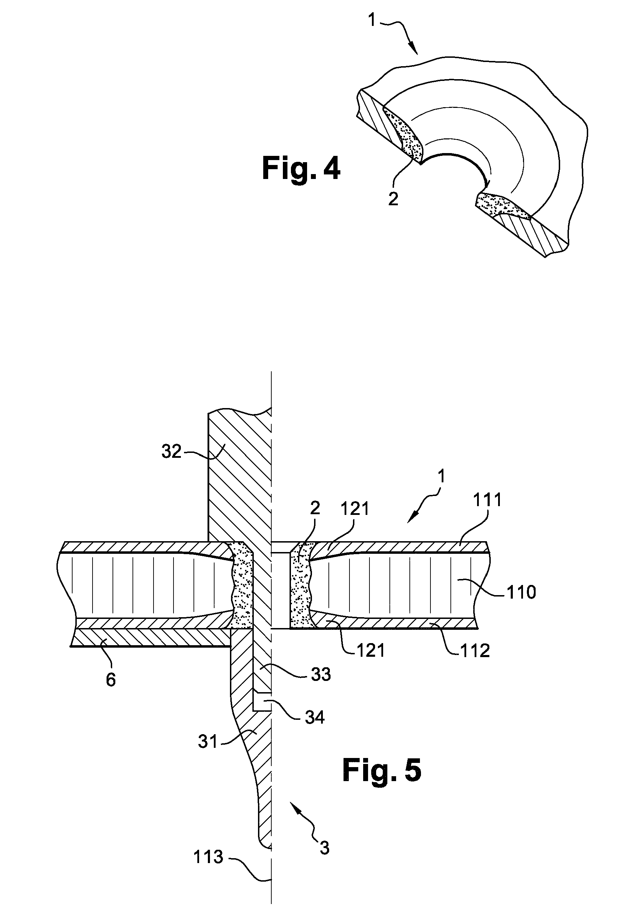

Dans une dernière étape non représentée lorsque la température est descendue en dessous d'une valeur au-dessus de laquelle la stabilité dimensionnelle de la matière de la matrice du matériau de la pièce et de l'insert ne serait pas garantie, l'aiguille 31 et le corps 32 sont séparés pour libérer la pièce 1 comportant le trou avec un insert comme illustré en coupe sur la figure 4.

Le procédé trouve également application dans le cas de pièces 1 en composite dites sandwich comportant, comme illustré sur la figure 5, une âme 110 constituée d'un matériau à faible densité, par exemple une mousse ou un matériau alvéolaire tel qu'un matériau en nid d'abeille, compris entre deux panneaux 111, 112 en matériau composite comportant des fibres dans une résine thermoplastique. Dans ce cas la pose d'un insert 2 s'avère particulièrement utile pour améliorer la résistance à l'écrasement dans la zone du trou et un trou est avantageusement réalisé suivant le procédé et avec un outil de pose d'insert tels que décrits.

Dans le cas d'un tel perçage d'un matériau sandwich le procédé, comme illustré sur la demi-section gauche de la figure 5, est appliqué pour réaliser le perçage des deux panneaux 111, 112 successivement suivant un axe commun 113 avec un outil 3 dont la longueur de la zone intermédiaire 311 est adaptée pour y placer un insert 2 dont la longueur correspond à l'épaisseur du panneau sandwich.

Dans ce cas particulier, il est avantageux que la matière excédentaire 121, 122 repoussée vers les bords du trou dans chaque panneau 111, 112 soit, dans la zone périphérique 14 de chaque panneau, repoussée lors de l'étape de calibrage entre l'épaulement 322 du corps 32 et la plaque de contre-poussée 6 du côté d'une face du panneau située du côté de l'âme 110 soit par déformation de la mousse soit par fluage dans les alvéoles, de sorte que la pièce ne comporte pas de déformation sur ses faces extérieures dans la zone du trou comme illustré sur la section de la figure 5, en particulier la demi-section droite de la figure qui présente la pièce réalisée lorsque l'outil de perçage est retiré.

Pour élever la température de la matrice jusqu'à la température **Tf** de thermoformage, différentes méthodes sont avantageusement mises en oeuvre suivant le processus de fabrication de la pièce 1 et le moment où des trous, recevant les inserts, doivent être réalisés.

Une méthode consiste à réaliser le perçage lorsque la pièce 1 est encore à une température suffisante, supérieure ou égale à la température **Tf,** à l'issue d'un processus de formage dans un moule au cours duquel la température a été augmentée.

Dans ce cas avantageusement le moule, ou une de ses parties, est utilisé comme plaque de contre-poussée 33 et comporte des trous 331 pouvant être dégagés pour le passage de l'aiguille 31 aux emplacements nécessaires.

Une autre méthode consiste à réchauffer localement la matière par des moyens externes à l'emplacement où un trou doit être réalisé, par exemple au moyen d'un four rayonnant localement de la chaleur, avant de réaliser le perçage en continuant à chauffer localement la pièce 1 si besoin.

Une autre méthode consiste à apporter la chaleur nécessaire à l'élévation de température de la matrice de la pièce 1 au moyen d'une aiguille 31 chauffante.

Dans ce cas l'aiguille 31 est réalisée dans un matériau bon conducteur de la chaleur. Avantageusement l'aiguille 31 est alors chauffée par conduction à partir du corps 32 lui-même porté à une température adaptée pour amener la matière de la matrice à une température au moins égale à la température **Tf.**

Une autre méthode consiste à apporter de l'énergie à la pièce 1 par ultrason au moyen de l'aiguille 31 lorsque le matériau composite de la pièce se prête à un tel mode de chauffage.

Lorsque l'énergie pour chauffer la matrice est apportée par l'aiguille de préférence l'extrémité libre 315 de l'aiguille est conformée pour répondre au mieux à ce besoin et a donc une forme sphérique ou arrondie pour améliorer la surface de contact en particulier au début du processus de perçage.

L'invention permet donc de poser un insert dans un matériau thermoplastique de manière simultanée à la réalisation du trou dans lequel l'insert est posé, avec un procédé de perçage qui ne nécessite pas de mettre en oeuvre des outils coupants ni de couper les fibres du matériau. Il est ainsi obtenu un insert parfaitement fixé à la pièce et la possibilité dans le cas d'inserts en matériau thermoformables de conformer le bord du trou de l'insert dans l'opération de pose.

## Revendications

1. Procédé pour poser un insert 5() dans une pièce (1) en matériau composite formée essentiellement de fibres (10) maintenues dans une matrice (11), ladite pièce comportant une face supérieure (12), par laquelle un trou est réalisé dans ladite pièce et une face inférieure (13), par laquelle le trou débouche, ladite matrice consistant essentiellement en un matériau thermoplastique, présentant un état plastique lorsqu'il est porté à une température de formage **Tf** présentant un état non plastique lorsque qu'il est à une température (maximale) d'utilisation **Tu,** inférieure à **Tf,** ledit procédé comportant les étapes de :
- a) chauffer localement au moins à l'endroit du trou à réaliser la matrice (11) de la pièce (1) à la température **Tf ;**
- b) écarter les fibres (10) maintenues par la matrice (11) à l'emplacement voulu pour le trou en repoussant radialement par rapport à un axe longitudinal du trou la matière à l'état plastique de ladite matrice jusqu'à atteindre une section voulue pour le trou ;
**caractérisé en ce que** :
- c) le trou est réalisé avec une section sensiblement égale à la section extérieure de l'insert (2) à poser ;
- d) l'insert (2) est inséré dans le trou réalisé, la matière de la matrice étant à l'état plastique ;
- e) la matière de la matrice (11) est refroidie à la température **Tu,** ou au moins à une température inférieure à **Tf** pour laquelle ladite matrice n'a plus de propriété thermoplastique, en maintenant la matière de la matrice (11) repoussée et les fibres (10) écartées autour du trou dans lequel est inséré l'insert (2).

2. Procédé suivant la revendication 1 comportant après l'insertion de l'insert à l'étape d) et avant le refroidissement de la matière de la matrice (11) à l'étape e) une étape de calibration de l'épaisseur de la pièce (1) dans une zone (14) périphérique du trou au cours de laquelle une pression est exercée entre la face supérieure (12) et la face inférieure (13) pour répartir la matière de la pièce (1) repoussée de l'emplacement du trou vers ladite zone périphérique.

3. Procédé suivant la revendication 1 ou la revendication 2 dans lequel l'insert (2) est un insert rigide dont les forme et dimensions ne sont pas modifiées lorsque ledit insert est inséré dans la pièce.

4. Procédé suivant la revendication 1 ou la revendication 2 dans lequel l'insert est formé à la température **Tf**, ledit insert étant réalisé dans un matériau comportant une matrice thermoformable ou thermoducissable.

5. Procédé suivant la revendication 4 prise en combinaison avec la revendication 2 dans lequel un trou de l'insert (2) est conformé par une empreinte d'une forme appliquée au cours de l'étape de calibration.

6. Procédé suivant l'une des revendications précédentes dans lequel l'insert (2) est maintenu par un dispositif perçage, dont une section d'un talon (312) d'une aiguille (31) correspond sensiblement à la section de l'insert, de sorte que l'insert est inséré dans le trou réalisé par l'aiguille (31) lorsque ladite aiguille traverse la pièce (1).

7. Procédé suivant l'une des revendications précédentes dans lequel le chauffage de la pièce à l'emplacement du trou à réaliser est réalisé lors d'une étape de formage de la pièce (1) indépendante de l'opération de perçage.

8. Procédé suivant l'une des revendications 1 à 6 dans lequel dans lequel le chauffage de la pièce (1) à l'emplacement du trou à réaliser est réalisé localement lors de l'opération de perçage par des moyens de chauffage par rayonnement ou par conduction de contact ou par ultrasons.

9. Outil de pose d'un insert dans une pièce (1) en matériau composite formée essentiellement de fibres (10) maintenues dans une matrice (11), ladite pièce comportant une face supérieure (12), par laquelle un trou est réalisé et une face inférieure (13), par laquelle le trou débouche, ladite matrice consistant essentiellement en un matériau thermoplastique, présentant un état plastique lorsqu'il est porté à une température de formage **Tf** et présentant un état non plastique lorsque qu'il est à une température d'utilisation **Tu,** inférieure à **Tf, caractérisé en ce qu'il** comporte un outil de perçage (3) :
- i) comportant une aiguille (31), conformée pour écarter les fibres (10) maintenues par la matrice (11) à l'emplacement voulu pour le trou et pour repousser radialement par rapport à un axe longitudinal du trou la matière de ladite matrice à l'état plastique lorsque l'aiguille est enfoncée dans la pièce, une section du trou étant déterminée par une section d'un talon (312) de l'aiguille (31) à l'opposé d'une extrémité libre (315) de ladite aiguille ;
- ii) comportant un corps (32) agencé du côté du talon (312) de l'aiguille (31) ;
- iii) dans lequel l'aiguille 31) et le corps (32) sont assemblés avec une zone intermédiaire (331) de section réduite par rapport à la section du talon (312)

10. Outil suivant la revendication 9 dans lequel l'aiguille (31) et le corps (32) sont assemblés par une extension cylindrique (33) du corps ou de l'aiguille, comportant la zone intermédiaire (331), coopérant avec un trou (34) correspondant de l'aiguille ou du corps, et dans lequel ladite aiguille et ledit corps sont séparables de sorte qu'un insert (2) peut être placé sur la zone intermédiaire (331), entre le talon (312) de l'aiguille et le corps (32).

11. Outil suivant la revendication 9 ou la revendication 10 dans lequel des formes et dimensions de la section du talon (312) correspondent à des formes et dimensions d'une section extérieure de l'insert avant la pose dudit insert.

12. Outil suivant l'une des revendications 9 à 11 dans lequel le corps (32) forme un épaulement (322) par rapport au talon (312), ledit épaulement constituant une surface d'appui sur une zone périphérique (14) du trou lorsque l'aiguille (31) et l'insert (2) sont enfoncés dans la pièce (1).

13. Outil suivant l'une des revendications 9 à 12 dans lequel le corps (32) et l'aiguille (31) comporte en position assemblée au moins une première position écartée dans laquelle l'insert (2) n'est pas déformé et une seconde position rapprochée dans laquelle l'insert (2) est déformé lorsque ledit insert peut être formé plastiquement à la température **Tf.**

14. Outil suivant la revendication 13 dans lequel le corps (32) ou l'aiguille (31) comporte une forme (323) destinée à laisser une empreinte de ladite forme dans un insert (2), placé dans l'espace de la zone intermédiaire (331) de l'extension cylindrique (33), sur un bord d'un trou dudit insert.

15. Outil suivant l'une des revendications 9 à 14 dans lequel l'aiguille (31) est associée à des moyens de chauffage par rayonnement ou par conduction ou par ultrasons d'une zone de la pièce (1) dans laquelle ledit dispositif doit réaliser un trou.
